(19) Europäisches Patentamt
European Patent Office
Office européen des brevets

(11) **EP 4 769 232 A1**

(12) **EUROPEAN PATENT APPLICATION**
published in accordance with Art. 153(4) EPC

(43) Date of publication:
01.07.2026 Bulletin 2026/27

(21) Application number: 24866949.1

(22) Date of filing: 14.06.2024

(51) International Patent Classification (IPC):
*G06N 3/08* (2023.01)

(52) Cooperative Patent Classification (CPC):
G06N 3/08

(86) International application number:
PCT/CN2024/099303

(87) International publication number:
WO 2025/060530 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.09.2023 RU 2023123996

(71) Applicant: HUAWEI TECHNOLOGIES CO., LTD.
Shenzhen 518129 (CN)

(72) Inventors:
• LUO, Yuanyong
  Shenzhen, Guangdong 518129 (CN)
• JIAO, Jianbing
  Shenzhen, Guangdong 518129 (CN)
• ZHANG, Zhongxing
  Shenzhen, Guangdong 518129 (CN)
• MIKHAYLOV, Dmitry Sergeevich
  Shenzhen, Guangdong 518129 (CN)

(74) Representative: Gill Jennings & Every LLP
The Broadgate Tower
20 Primrose Street
London EC2A 2ES (GB)

(54) **NEURAL NETWORK TRAINING METHOD AND APPARATUS**

(57) This application provides a neural network training method and apparatus. The method includes: training a target neural network using a first training mode within a first time period for starting training the target neural network, where training precision corresponding to the first training mode is first precision; and training the target neural network using a second training mode within a second time period for training the target neural network, where training precision corresponding to the second training mode is second precision, the first precision is lower than the second precision, a start moment of the second time period is an end moment of the first time period, and an end moment of the second time period is a training end moment of the target neural network. With the method provided in this application, training duration of a neural network can be shortened without compromising training precision of the neural network.

Train a target neural network using a first training mode within a first time period for starting training the target neural network, where training precision corresponding to the first training mode is first precision — 410

Train the target neural network using a second training mode within a second time period for training the target neural network, where training precision corresponding to the second training mode is second precision, and the first precision is lower than the second precision — 420

FIG. 4

**Description**

This application claims priority to Russian Patent Application No. 2023123996, filed on September 18, 2023 and entitled "PROCESSING FRAMEWORK AND METHOD FOR DOWNGRADED TRAINING", which is incorporated herein by reference in its entirety.

**TECHNICAL FIELD**

This application relates to the field of artificial intelligence (artificial intelligence, AI), and specifically, to a neural network training method and apparatus.

**BACKGROUND**

Artificial intelligence (artificial intelligence, AI) is a field encompassing theories, methods, technologies, and application systems that employ digital computers or machines controlled by digital computers to simulate, extend, and expand human intelligence, to perceive the environment, obtain knowledge, and achieve an optimal result by using the knowledge. In other words, artificial intelligence is a branch of computer science that seeks to understand the nature of intelligence and produce novel intelligent machines capable of reacting in ways similar to human intelligence. Artificial intelligence studies design principles and implementation methods of various intelligent machines, so that the machines have perception, reasoning, and decision-making functions. Research in the field of artificial intelligence spans robotics, natural language processing, computer vision, decision-making and reasoning, human-machine interaction, recommendation and search, AI basic theories, and the like.

An AI development framework is a toolkit that enables AI developers to quickly develop AI models. It encapsulates a variety of callable operators, and also includes essential tools for AI model development, training, and deployment. In various AI development frameworks (such as PyTorch, TensorFlow, and MindSpore) in the industry, a key competitive advantage lies in shortening training duration without compromising training precision of a neural network.

In a related technical solution, a neural network is trained using a plurality of precision modes throughout an entire training process of a neural network model, with repeated switching between the plurality of precision training modes. Such repeated switching prolongs the training's cycle of the neural network model, and consequently, increases overall training time of the mode.

Therefore, how to shorten training duration of a neural network without compromising training precision of the neural network becomes an urgent technical problem to be resolved currently.

**SUMMARY**

This application provides a neural network training method and apparatus, and a compute device. The method can be used to shorten training duration of a neural network without compromising training precision of the neural network.

According to a first aspect, a neural network training method is provided. The method includes: training a target neural network using a first training mode within a first time period for starting training the target neural network, where training precision corresponding to the first training mode is first precision; and training the target neural network using a second training mode within a second time period for training the target neural network, where training precision corresponding to the second training mode is second precision, the first precision is lower than the second precision, a start moment of the second time period is an end moment of the first time period, and an end moment of the second time period is a training end moment of the target neural network.

In the foregoing technical solution, a training mode with lower precision is used for training in the former time period of training the target neural network, and a training mode with higher precision is used for training in the latter time period. In this way, training duration of the target neural network can be shortened without compromising training precision of the target neural network.

With reference to the first aspect, in some implementations of the first aspect, the method further includes: obtaining a current value and a target value of a parameter of training the target neural network, where the parameter is a parameter representing a training time dimension in a process of training the target neural network; and determining, based on a ratio of the current value to the target value of the parameter meeting a first preset condition, that current training of the target neural network is within the first time period; or determining, based on a ratio of the current value to the target value of the parameter meeting a second preset condition, that current training of the target neural network is within the second time period.

In the foregoing technical solution, the ratio of the current value to the target value of the parameter representing the training time dimension in the process of training the target neural network meets the first preset condition or meets the second preset condition, to determine whether the current training of the target neural network is within the first time period or the second time period, and then the target neural network may be trained by using corresponding training precision in a corresponding time period.

With reference to the first aspect, in some implementations of the first aspect, the parameter of training the target neural network includes but is not limited to at least one of the following: an epoch epoch, a step step, and a loss loss.

With reference to the first aspect, in some implementations of the first aspect, the parameter is the epoch, the first preset condition is that a ratio of a current value of the epoch to a target value of the epoch is less than or equal to a first coefficient, and the second preset condition is that the ratio of the current value of the epoch to the target value of the epoch is greater than the first coefficient.

With reference to the first aspect, in some implementations of the first aspect, the parameter is the epoch, the first preset condition is that a ratio of a current value of the epoch to a target value of the epoch is less than a first coefficient, and the second preset condition is that the ratio of the current value of the epoch to the target value of the epoch is greater than or equal to the first coefficient.

With reference to the first aspect, in some implementations of the first aspect, the first coefficient is a value between 0 and 1.

With reference to the first aspect, in some implementations of the first aspect, the parameter is the step, the first preset condition is that a ratio of a current value of the step to a target value of the step is less than or equal to a second coefficient, and the second preset condition is that the ratio of the current value of the step to the target value of the step is greater than the second coefficient.

With reference to the first aspect, in some implementations of the first aspect, the parameter is the step, the first preset condition is that a ratio of a current value of the step to a target value of the step is less than a second coefficient, and the second preset condition is that the ratio of the current value of the step to the target value of the step is greater than or equal to the second coefficient.

With reference to the first aspect, in some implementations of the first aspect, the second coefficient is a value between 0 and 1.

With reference to the first aspect, in some implementations of the first aspect, the parameter is the loss, the first preset condition is that a ratio of a current value of the loss to a target value of the loss is greater than or equal to a third coefficient, and the second preset condition is that the ratio of the current value of the loss to the target value of the loss is less than the third coefficient.

With reference to the first aspect, in some implementations of the first aspect, the parameter is the loss, the first preset condition is that a ratio of a current value of the loss to a target value of the loss is greater than a third coefficient, and the second preset condition is that the ratio of the current value of the loss to the target value of the loss is less than or equal to the third coefficient.

With reference to the first aspect, in some implementations of the first aspect, the third coefficient is a number greater than 1.

With reference to the first aspect, in some implementations of the first aspect, the foregoing coefficients (including the first coefficient, the second coefficient, and the third coefficient) may be configured by a user by using a client.

With reference to the first aspect, in some implementations of the first aspect, the foregoing coefficients (including the first coefficient, the second coefficient, and the third coefficient) may alternatively be automatically defaulted by a system. In this way, the user does not need to configure the coefficients, so that the user does not perceive different training modes used within the first time period and the second time period respectively, to improve user experience.

With reference to the first aspect, in some implementations of the first aspect, the first precision corresponds to a low-precision model compiled by the target neural network, and the second precision corresponds to a high-precision model compiled by the target neural network; the compiled low-precision model is trained in the first training mode within the first time period; and the compiled high-precision model is trained in the second training mode within the second time period.

With reference to the first aspect, in some implementations of the first aspect, precision of an operator included in the compiled low-precision model is the first precision. Specifically, for example, input precision and/or output precision of the operator in the compiled low-precision model are/is the first precision.

With reference to the first aspect, in some implementations of the first aspect, precision of an operator included in the compiled high-precision model is the second precision. Specifically, for example, input precision and/or output precision of the operator in the compiled high-precision model are/is the second precision.

With reference to the first aspect, in some implementations of the first aspect, the operator may include but is not limited to a matrix multiplication operator.

According to a second aspect, a neural network training apparatus is provided, including a first training module and a second training module. The first training module is configured to train a target neural network using a first training mode within a first time period for starting training the target neural network, where training precision corresponding to the first training mode is first precision. The second training module is configured to train the target neural network using a second training mode within a second time period for training the target neural network, where training precision corresponding to the second training mode is second precision, the first precision is lower than the second precision, a start moment of the second time period is an end moment of the first time period, and an end moment of the second time period is a training end moment of the target neural network.

With reference to the second aspect, in some implementations of the second aspect, the apparatus further includes an obtaining module and a determining module. The obtaining module is configured to obtain a current value and a target value of a parameter of training the target neural network, where the parameter is a parameter representing a training time dimension in a process of training the target neural network. The determining module is configured to determine, based on a ratio of the current value to the target value of the parameter meeting a first preset condition, that current training of the target neural network is within the first time period. Alternatively, the determining module is configured to determine, based on a ratio of the current value to the target value of the parameter meeting a second preset condition, that current training of the target neural network is within the second time period.

With reference to the second aspect, in some implementations of the second aspect, the parameter of training the target neural network includes at least one of the following: an epoch epoch, a step step, and a loss loss.

With reference to the second aspect, in some implementations of the second aspect, the parameter is the epoch, the first preset condition is that a ratio of a current value of the epoch to a target value of the epoch is less than or equal to a first coefficient, and the second preset condition is that the ratio of the current value of the epoch to the target value of the epoch is greater than the first coefficient.

With reference to the second aspect, in some implementations of the second aspect, the parameter is the epoch, the first preset condition is that a ratio of a current value of the epoch to a target value of the epoch is less than a first coefficient, and the second preset condition is that the ratio of the current value of the epoch to the target value of the epoch is greater than or equal to the first coefficient.

With reference to the second aspect, in some implementations of the second aspect, the first coefficient is a value between 0 and 1.

With reference to the second aspect, in some implementations of the second aspect, the parameter is the step, the first preset condition is that a ratio of a current value of the step to a target value of the step is less than or equal to a second coefficient, and the second preset condition is that the ratio of the current value of the step to the target value of the step is greater than the second coefficient.

With reference to the second aspect, in some implementations of the second aspect, the parameter is the step, the first preset condition is that a ratio of a current value of the step to a target value of the step is less than a second coefficient, and the second preset condition is that the ratio of the current value of the step to the target value of the step is greater than or equal to the second coefficient.

With reference to the second aspect, in some implementations of the second aspect, the second coefficient is a value between 0 and 1.

With reference to the second aspect, in some implementations of the second aspect, the parameter is the loss, the first preset condition is that a ratio of a current value of the loss to a target value of the loss is greater than or equal to a third coefficient, and the second preset condition is that the ratio of the current value of the loss to the target value of the loss is less than the third coefficient.

With reference to the second aspect, in some implementations of the second aspect, the parameter is the loss, the first preset condition is that a ratio of a current value of the loss to a target value of the loss is greater than a third coefficient, and the second preset condition is that the ratio of the current value of the loss to the target value of the loss is less than or equal to the third coefficient.

With reference to the second aspect, in some implementations of the second aspect, the third coefficient is a number greater than 1.

With reference to the second aspect, in some implementations of the second aspect, the foregoing coefficients (including the first coefficient, the second coefficient, and the third coefficient) may be configured by a user by using a client.

With reference to the second aspect, in some implementations of the second aspect, the foregoing coefficients (including the first coefficient, the second coefficient, and the third coefficient) may alternatively be automatically defaulted by a system. In this way, the user does not need to configure the coefficients, so that the user does not perceive different training modes used within the first time period and the second time period respectively, to improve user experience.

With reference to the second aspect, in some implementations of the second aspect, the first precision corresponds to a low-precision model compiled by the target neural network, and the second precision corresponds to a high-precision model compiled by the target neural network. The first training module is specifically configured to train the compiled low-precision model in the first training mode within the first time period. The second training module is specifically configured to train the compiled high-precision model in the second training mode within the second time period.

With reference to the second aspect, in some implementations of the second aspect, precision of an operator included in the compiled low-precision model is the first precision. Specifically, for example, input precision and/or output precision of the operator in the compiled low-precision model are/is the first precision.

With reference to the second aspect, in some implementations of the second aspect, precision of an operator included in the compiled high-precision model is the second precision. Specifically, for example, input precision and/or output precision of the operator in the compiled high-precision model are/is the second precision.

With reference to the second aspect, in some implementations of the second aspect, the operator may include but is not limited to a matrix multiplication operator.

It should be understood that beneficial effects corresponding to the second aspect and the implementations are similar to beneficial effects of the first aspect and the implementations. For details, refer to the beneficial effects of the first aspect and the implementations. Details are not described herein again.

According to a third aspect, a compute device is provided, including a processor and a storage. The processor is configured to execute instructions stored in the storage of the compute device, so that the compute device performs the method in any one of the first aspect or the possible implementations of the first aspect.

Optionally, the processor may be a general-purpose processor, and may be implemented by hardware or software. When the processor is implemented by hardware, the processor may be a logic circuit, an integrated circuit, or the like. When the processor is implemented by software, the processor may be a general-purpose processor, and is implemented by reading software code stored in the storage. The storage may be integrated into the processor, or may be located outside the processor and exist independently.

According to a fourth aspect, a computer program product including instructions is provided. When the instructions are run by a compute device, the compute device is enabled to perform the method in any one of the first aspect or the implementations of the first aspect.

According to a fifth aspect, a computer-readable storage medium is provided, and includes computer program instructions. When the computer program instructions are executed by a compute device, the compute device performs the method in any one of the first aspect or the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the foregoing storage medium may be specifically a non-volatile storage medium.

**BRIEF DESCRIPTION OF DRAWINGS**

FIG. 1 is a block diagram of a training phase and an inference phase of a deep learning model;
FIG. 2 is a block diagram of a deep learning model 100;
FIG. 3 is a block diagram of an application scenario applicable to embodiments of this application;
FIG. 4 is a schematic flowchart of a neural network training method according to an embodiment of this application;
FIG. 5 is a schematic flowchart of another neural network training method according to an embodiment of this application;
FIG. 6 is a block diagram of a neural network training apparatus 600 according to an embodiment of this application;
FIG. 7 is a diagram of an architecture of a compute device 1500 according to an embodiment of this application;
FIG. 8 is a diagram of an architecture of a compute device cluster according to an embodiment of this application; and
FIG. 9 is a diagram in which compute devices 1500A and 1500B are connected through a network according to an embodiment of this application.

**DESCRIPTION OF EMBODIMENTS**

The following describes technical solutions of this application with reference to the accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may also be used.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "corresponding (corresponding, relevant)", and "corresponding (corresponding)" may be used interchangeably sometimes.

It should be noted that meanings expressed by the terms are consistent when differences of the terms are not emphasized.

Service scenarios described in embodiments of this application are intended to describe the technical solutions in embodiments of this application more clearly, and does not constitute any limitation on the technical solutions provided in embodiments of this application. A person of ordinary skill in the art can learn that the technical solutions provided in embodiments of this application are also applicable to similar technical problems with evolution of network architectures and emergence of new service scenarios.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

Artificial intelligence (artificial intelligence, AI) refers to is a field encompassing theories, methods, technologies, and application systems that employ digital computers or machines controlled by digital computers to simulate, extend, and expand human intelligence, to perceive the environment, obtain knowledge, and achieve an optimal result by using the knowledge. In other words, artificial intelligence is a branch of computer science that seeks to understand the nature of intelligence and produce novel intelligent machines capable of reacting in ways similar to human intelligence. Artificial intelligence studies design principles and implementation methods of various intelligent machines, so that the machines have perception, reasoning, and decision-making functions. Research in the field of artificial intelligence spans robotics, natural language processing, computer vision, decision-making and reasoning, human-machine interaction, recommendation and search, AI basic theories, and the like.

The fundamental principle of AI is to combine massive data with powerful computing and processing capabilities and intelligent algorithms to build an AI model tailored to specific tasks. In this way, the AI model can automatically summarize and learn latent patterns or features from data, approximating human-like ways of thinking.

AI model, also referred to as AI algorithm (or an AI operator), is a collective term of mathematical algorithms constructed according to artificial intelligence principles, and the foundation for using AI to resolve specific problems. Depending on different specific methods and/or technologies for implementing artificial intelligence, the AI model may also be specifically referred to as a machine learning model, a deep learning model, or a reinforcement learning model. The following specifically describes machine learning, the machine learning model, deep learning, the deep learning model, the neural network, reinforcement learning, and the reinforcement learning model.

Machine learning is a method for implementing artificial intelligence. An objective of the method is to design and analyze some algorithms (namely, models) that enable a computer to automatically "learn". The designed algorithms are referred to as machine learning models. The machine learning models are a type of algorithms that obtain a rule by automatically analyzing data and predict unknown data according to the rule. There are various types of machine learning models. The machine learning models may be classified into the following types based on whether a label corresponding to training data needs to be depended on during model training: 1. supervised learning model; and 2. unsupervised learning model.

1. The supervised learning model is a model obtained by determining a parameter of an initial AI model based on data in a given training dataset and a label corresponding to each piece of data in the training dataset. A process of determining the parameter of the initial AI model based on the data in the training dataset and the label corresponding to the data is also referred to as supervised learning (or supervised training). A label of data in a training dataset is usually manually annotated to identify a correct answer of the data to a specific task. Typical supervised learning models include: a support vector machine, a neural network model, a logistic regression model, a decision tree, a Naive Bayesian model, a Gaussian discriminative model, and the like. The supervised learning model is usually used for classification or regression.

2. The unsupervised learning model is a model obtained by determining a parameter of an initial AI model based on unlabeled data in a given training dataset. A process of determining the parameter of the initial AI model based on the unlabeled training data is also referred to as unsupervised learning (or unsupervised training). Through unsupervised learning, the model may discover meaningful information and associations in data and then predict a data result. There are many unsupervised learning models. Commonly used unsupervised learning models includes clustering model (clustering), principal component analysis (PCA), an anomaly detection model, autoencoder, a generative adversarial network (GAN), and the like.

Deep learning is a new technical field generated in a machine learning research process. Specifically, deep learning is a method for performing deep representation learning on data in machine learning. Deep learning is for interpreting the data by establishing a neural network that simulates a human brain to perform analysis and learning.

In the AI field, deep learning is a learning technology based on a deep neural network algorithm. The deep learning model includes an input layer, a hidden layer, and an output layer. The deep learning model processes data by using a plurality of nonlinear transformations.

In a machine learning method, almost all features need to be determined by industry experts, and then the features are encoded. However, a deep learning algorithm attempts to learn features from data. An algorithm designed based on a deep learning idea is referred to as the deep learning model.

Currently, a typical structure of the deep learning model is a deep neural network. A neural network is a mathematical model or a computational model that imitates a structure and a function of a biological neural network (a central nervous system of an animal, especially a brain). The neural network is formed by a large quantity of connected neurons for calculation. A neural network may include a plurality of neural network layers with different functions, and each layer includes a parameter and a calculation rule. Different layers in the neural network have different names based on different calculation formulas or different functions. For example, a layer for convolution calculation is referred to as a convolutional layer. The convolutional layer is commonly used to perform feature extraction on an input signal (for example, an image). A neural network may alternatively include a combination of a plurality of neural sub-networks. Neural networks of different structures is applicable to different scenarios (for example, classification and recognition), or provide different effects when applicable to a same scenario. That the structures of the neural networks are different specifically includes one or more of the following: quantities of network layers in the neural networks are different, sequences of the network layers are different, or weights, parameters, or calculation formulas at the network layers are different. A plurality of different types of neural networks having high accuracy applied to application scenarios such as recognition or classification already exist in the industry. Some of the neural networks, after being trained by using a specific dataset, may be separately used to complete a task, or complete a task in combination with another neural network (or another functional module).

In other words, the deep learning model is actually a machine learning model with a complex structure of the neural network. Based on whether a label corresponding to training data needs to be depended on during training of the deep learning model, the deep learning models may also be classified into a supervised learning model and an unsupervised learning model. Details are not described herein. Classic deep learning models include a convolutional neural network (convolutional neural network, CNN), a recurrent neural network (recurrent neural network, RNN), a recursive neural network (recursive neural network, RNN), and the like.

Reinforcement learning is a special field in machine learning, and is a process of continuously learning optimal policies, making sequence decisions, and obtaining maximum returns through interaction between an agent (Agent) and an environment (Environment).

In general, reinforcement learning is learning "what to do (that is, how to map a current situation to an action) to maximize a digitalized benefit signal". The agent is not told what actions to take, but tries to find out which actions are to produce the most benefits.

Reinforcement learning is different from supervised learning and unsupervised learning in the machine learning field. Supervised learning is a process of learning from externally provided training data with labels (taskdriven), and unsupervised learning is a process of searching for implicit structures in unlabeled data (data-driven). Reinforcement learning is a process of searching for a better solution through "exploration". The agent needs to develop existing experience to gain benefits, and explore, so that better action selection space can be obtained in the future (that is, learning from mistakes).

Any AI model needs to be trained before the AI model is used to resolve a specific technical problem. AI model training is a process of performing calculation on training data by using a specified initial model, and adjusting a parameter of the initial model by using a specific method based on a calculation result, so that the model gradually learns a specific rule and has a specific function. After training, an AI model with a stable function may be used for inference. AI model inference is a process of performing calculation on input data by using the trained AI model, to obtain a predicted inference result.

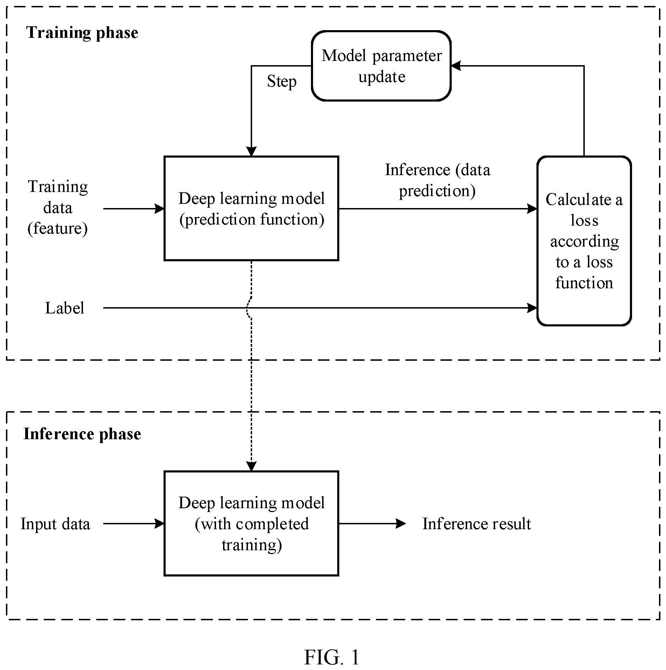

A most common approach is to perform supervised training on the AI model. For example, model training is performed on most deep learning models in a supervised training manner. The following describes, with reference to FIG. 1, a most widely used supervised training manner for a deep learning model.

As shown in FIG. 1, in a training phase, a training set for a deep learning model first needs to be constructed based on an objective. The training set includes a plurality of pieces of training data, and a label is set for each piece of training data. The label of the training data is a correct answer of the training data to a specific question, and the label may represent an objective of training the deep learning model by using the training data. For example, to train a deep learning model that may be used to identify different animals, the training set may include images (that is, training data) of a plurality of different animals, and each image may have a label to identify a type of an animal included in the image, for example, a cat or a dog. In this example, the type of the animal corresponding to each image is the label of the training data.

When the deep learning model is trained, the training data may be input in batches into a deep learning model obtained through parameter initialization, and the deep learning model performs calculation (namely, "inference") on the training data to obtain a predicted result for the training data. The predicted result obtained through inference and the label corresponding to the training data are used as data for calculating a loss according to a loss function. The loss function is a function used to calculate, in a model training phase, a difference (that is, a loss loss) between a predicted result of a model for training data and a label of the training data. The loss function may be implemented by using different mathematical functions. Common expressions of the loss function include a mean square error loss function, a logarithmic loss function, a least square method, and the like.

The loss calculated according to the loss function (loss function) may be used to update a parameter of the deep learning model. A specific parameter update manner is usually a gradient descent method. Model training is a process of repeated steps. In each step, different training data is inferred and a loss is calculated. An objective of a plurality of steps is to continuously update the parameter of the deep learning model and find a parameter configuration that minimizes or gradually stabilizes the loss of the loss function.

It should be understood that the loss function is a function that maps a value of a random event or a value of a related random variable of the random event to a non-negative real number to represent a "risk" or a "loss" of the random event. In application, the loss function, as a learning criterion, is usually associated with an optimization problem, that is, a model is solved and evaluated by minimizing the loss function. For example, in machine learning, the loss function is used for parametric estimation (parametric estimation) of a model, and a loss obtained according to the loss function may be used to describe a difference between a predicted value and an actual value of the model. Common loss functions include a mean square error loss function, a support vector machine (support vector machine, SVM) hinge loss function, a cross entropy loss function, and the like.

In the training phase, to make training efficiency of a model and performance of a trained model better, some proper hyperparameters need to be set for training. The hyperparameters of the deep learning model are a type of parameters that cannot be obtained by learning training data in a training process or that cannot change due to driving of training data, and are a concept relative to a parameter in the model. The hyperparameters of the deep learning model are usually manually set based on experience or an experiment. The hyperparameters include a learning rate (learning rate), a batch sample size (batch size), a network structure hyperparameter (for example, a quantity of network layers (also referred to as a depth), an interaction manner between network layers, a quantity of convolution kernels, a size of a convolution kernel, and an activation function), and the like. The learning rate is used as a hyperparameter to control an update amplitude of a parameter weight of a model in a training process, and greatly affects a training speed and precision.

As shown in FIG. 1, a deep learning model with completed training may be used to perform inference on input data. In an inference phase, data in an actual application scenario is usually used as input data, and an inference result may be obtained through inference of the deep learning model with completed training. The inference phase is actual application of the deep learning model with completed training, and can quickly use an AI capability to resolve a specific technical problem. Currently, there are many AI application scenarios. Inference of the deep learning model can also be used in various application scenarios, for example, personnel identification for an access control and security system, video-based violence detection, and express waybill number detection and identification.

The foregoing uses training of the most typical deep learning model as an example for description. Training of another type of model is slightly different, but a principle is similar. In most cases, inference is performed on training data, and a parameter in the model is adjusted based on an inference result, to obtain a parameter combination that stabilizes model performance.

Generally, the AI model in machine learning usually needs to be trained in a supervised learning manner. Through AI model training in the supervised learning manner, the AI model can learn, in a training set with a label, an association between training data in the training set and the corresponding label in a more targeted manner, so that the AI model with completed training has high accuracy when being used to predict other input data.

An AI development framework is a toolkit that enables AI developers to quickly develop AI models. It encapsulates a variety of callable operators, and also includes essential tools for AI model development, training, and deployment.

In processes such as construction, training, and inference of the AI model, an encapsulated operator in an AI framework may be called in an API call manner, and a corresponding operation is completed with reference to some simple driver code.

The AI development framework in the industry is usually open-source. A typical AI development framework used to develop the deep learning model is also referred to as a deep learning framework, including PaddlePaddle, TensorFlow, Caffe, Theano, MXNet, Torch, MindSpore, PyTorch, and the like. A developer may install the AI development framework locally and then develop the AI model locally. Alternatively, the developer may use the AI development framework to develop the AI model on an online platform (such as an online open-source framework platform or public cloud AI basic development platform).

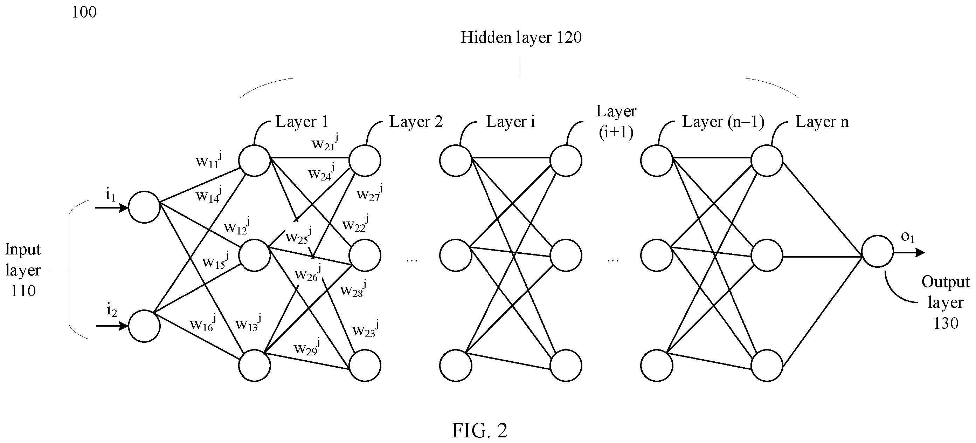

With reference to FIG. 2, the following describes in detail a possible deep learning model training process applied to embodiments of this application.

FIG. 2 is a block diagram of a deep learning model 100. The deep learning model 100 may include an input layer 110, a hidden layer 120, and an output layer 130.

It should be understood that in this embodiment of this application, an example in which the hidden layer 120 includes n (n is greater than 1) layers of neurons is used for description.

It should be further understood that each of the input layer 110, the output layer 130, and the hidden layer 120 includes one or more neurons. In FIG. 1, an example in which the input layer 110 includes two neurons, each of the n layers in the hidden layer 120 includes three neurons, and the output layer 130 includes one neuron is used for description.

The deep learning model 100 shown in FIG. 2 may be a fully connected neural network or a convolutional neural network (convolutional neural network, CNN). When all neurons at each layer are connected to all neurons at a next layer (none of weights of all the neurons at each layer is 0), the deep learning model 100 is a fully connected neural network model. When all neurons at each layer are not connected to all neurons at a next layer (a part of weights w of all the neurons at each layer is 0), the deep learning model 100 is a CNN model.

Refer to FIG. 2. The deep learning model 100 may include forward propagation (forward propagation, FP) calculation and back propagation (back propagation, BP) calculation.

The following describes in detail a process of performing FP calculation in a compute node.

In an FP calculation process, training data is obtained, for example, pixel information of an image is input, and the training data is used as an input ($i_1$, $i_2$) of the input layer 110 in the deep learning model 100. A predicted result may be output from the output layer 130 after the input of the input layer 110 passes through a plurality of neurons at the hidden layer 120. Specifically, a neuron at each layer of the hidden layer 120 corresponds to one parameter matrix. A product of the input of the input layer 110 and a parameter matrix of a neuron at the 1st layer is used as an input of the neuron at the 1st layer of the hidden layer 120. An activation function (which for example, may be a sigmoid function) in the neuron at the first layer is performed on the input of the neuron at the 1st layer of the hidden layer 120, to output an output value of the neuron at the 1st layer. A product of the output value of the neuron at the 1st layer of the hidden layer 120 and a parameter matrix of a neuron at the 2nd layer is used as an input of the neuron at the 2nd layer of the hidden layer 120. Similarly, by analogy, the predicted result is finally output from the output layer 130.

Weights in these parameter matrices need to be corrected in a large amount of training in actual application. Each parameter matrix formed by using a weight obtained through training may extract pixel information from a to-be-inferred image input by a user, to help the deep learning model 100 perform correct inference on the to-be-inferred image.

In a j$^{th}$ step process of FP calculation, an input of a 1st neuron at the 1st layer is $A_{11}^j = w_{11}^j \times i_1 + w_{14}^j \times i_2$, and an output of the 1st neuron at the 1st layer is $f(A_{11}^j)$; an input of a 2nd neuron at the 1st layer is $A_{12}^j = w_{12}^j \times i_1 + w_{15}^j \times i_2$, and an output of the 2nd neuron at the 1st layer is $f(A_{12}^j)$; and an input of a 3rd neuron at the 1st layer is $A_{13}^j = w_{13}^j \times i_1 + w_{16}^j \times i_2$, and an output of the 3rd neuron at the 1st layer is $f(A_{13}^j)$. $f(A_{11}^j)$ is an activation function whose input is $A_{11}^j$.

In the j$^{th}$ step process, an input of the neuron at the 1st layer is:

$$\begin{pmatrix} w_{11}^j \times i_1 + w_{14}^j \times i_2 \\ w_{12}^j \times i_1 + w_{15}^j \times i_2 \\ w_{13}^j \times i_1 + w_{16}^j \times i_2 \end{pmatrix} = \begin{pmatrix} w_{11}^j & w_{14}^j \\ w_{12}^j & w_{15}^j \\ w_{13}^j & w_{16}^j \end{pmatrix} \times \begin{pmatrix} i_1 \\ i_2 \end{pmatrix}$$

Therefore, the input of the neuron at the 1st layer may be represented as $A_1^j = w_1^j \times B_0^j$, and an output may be represented as $B_1^j = f(A_1^j)$,

where $A_1^j = \begin{pmatrix} A_{11} \\ A_{12} \\ A_{13} \end{pmatrix}$, $w_1^j = \begin{pmatrix} w_{11}^j & w_{14}^j \\ w_{12}^j & w_{15}^j \\ w_{13}^j & w_{16}^j \end{pmatrix}$, and $B_0^j = \begin{pmatrix} i_1 \\ i_2 \end{pmatrix}$.

j represents a quantity of steps, and is usually equal to a quantity of times that the input layer 110 obtains an input $(i_1, i_2)$. $w_1^j$ represents a parameter matrix of the neuron at the 1st layer in the jth step process.

A product of an output $B_1$ of the neuron at the 1st layer and a parameter matrix of a neuron at the 2nd layer may be used as an input of the neuron at the 2nd layer. Therefore, in the jth step process of FP, the input of the neuron at the 2nd layer may be represented as $A_2^j = w_2^j \times B_1^j$, and an output of the neuron at the 2nd layer may be represented as $B_2^j = f(A_2^j)$.

Similarly, in the jth step process of FP, an input of a neuron at an ith layer may be represented as $A_i^j = w_i^j \times B_{i-1}^j$, and an output of the neuron at the ith layer may be represented as $B_i^j = f(A_i^j)$, where $1 \leq i \leq n$.

The following describes in detail a process of performing BP calculation in a compute node.

In a process of training the deep learning model 100, a predicted value $o_1$ output by the output layer 130 in the deep learning model 100 needs to be as close as possible to prior knowledge (prior knowledge) of training data. The prior knowledge is also referred to as ground truth (ground truth), and usually includes a predicted result corresponding to the training data provided by a person. Therefore, a current predicted value can be compared with the prior knowledge. Then, a parameter matrix at each layer in the deep learning model 100 is updated based on a difference between the current predicted value and the prior knowledge (certainly, there is usually an initialization process before a first update, to be specific, the parameter matrix corresponding to the neuron at each layer of the hidden layer 120 in the deep learning model 100 is initialized). In addition, an error BP algorithm is used to correct a weight of the parameter matrix in the deep learning model 100 in the process of training the deep learning model 100, to minimize an error loss of the deep learning model 100.

Specifically, there may be an error between the predicted value generated in the process of performing FP calculation and the prior knowledge. If the output predicted value is greater than the prior knowledge, the weight in the parameter matrix may be adjusted to make the output predicted value smaller. If the output predicted value is smaller than the prior knowledge, the weight in the parameter matrix may be adjusted to make the output predicted value greater. The BP calculation is an error-dominant reverse motion, and aims to obtain an optimal parameter matrix of the neuron at each layer.

It should be understood that the training data input by the user may include training data used as an input and the predicted result corresponding to the training data provided by the person.

In an example, the deep learning model 100 is applied to the image recognition field. The training data input by the deep learning model 100 is pixel information of an image, and the prior knowledge corresponding to the training data is a label "dog" of the image. The training data is input to the input layer 110, and after FP calculation of the deep learning model 100 is performed on the training data, a predicted value output from the output layer 130 is compared with the prior knowledge. For example, if the predicted value output from the output layer 130 is "cat", the parameter matrix at each layer in the deep learning model 100 may be updated based on an error between the predicted value and the prior knowledge "dog".

In a jth step process, BP calculation may be used to calculate an error E between the output predicted value $o_1$ and the prior knowledge. In addition, a weight in the parameter matrix of the neuron at each layer in the deep learning model 100 may be corrected based on the error E along a direction of the output layer 130, the hidden layer 120, and the input layer 110. Specifically, correction of the weight may be separately calculating a gradient $g_i^j$ of the weight in the parameter matrix. The gradient $g_i^j$ may be calculating a derivative of the weight in the parameter matrix by using the error E, where $1 \leq i \leq n$.

Similar to the jth step process, the deep learning model 100 still performs FP calculation and then performs BP calculation in a (j + 1)th step. For example, in an FP calculation process of the (j + 1)th step, the weight in the parameter matrix is corrected based on the gradient $g_i^j$ obtained through FP calculation of the jth step, and a predicted output value is calculated based on a corrected parameter matrix. In a BP calculation process of the (j + 1)th step, a gradient $g_i^{j+1}$ of the weight in the parameter matrix is calculated based on the error E between the output value obtained through FP calculation of the (j + 1)th step and the prior knowledge, so that the weight in the parameter matrix can be corrected again in a (j + 2)th step process based on $g_i^{j+1}$. The weight in the parameter matrix is continuously corrected in a plurality of step processes, so that an output value predicted by the deep learning model 100 is as close as possible to the prior knowledge of the training data.

Specifically, in FP calculation of the (j + 1)th step, when an input and an output of the neuron at the ith layer are calculated, the parameter matrix of the neuron at the ith layer becomes $w_i^{j+1} = w_i^j - g_i^j$. For a process of calculating an input and an output of the neuron at each layer based on $w_i^{j+1}$, refer to the foregoing descriptions of FP calculation in the $j^{th}$ step. Details are not described herein again.

It should be noted that the parameter matrix calculation formula shown above is a possible implementation, or may be another variation of the formula, and falls within the protection scope of embodiments of this application.

In various AI development frameworks (such as PyTorch, TensorFlow, and MindSpore) in the industry, a key competitive advantage lies in shortening training duration without compromising training precision of a neural network.

In a related technical solution, a neural network is trained using a single-precision mode. For example, the single-precision mode is a high-precision training mode, that is, a full-precision floating-point number (for example, FP32) mode is used for an operator in neural network training to perform an operation. Although this training mode can ensure training precision of the neural network, because a full-precision floating-point number (for example, FP32) occupies large storage space, a throughput of operator calculation is greatly reduced, and a training speed is reduced. As a result, training time of the model is long. For another example, the single-precision mode is a low-precision training mode, that is, a half-precision floating-point number (for example, FP16) mode is used for an operator in neural network training to perform an operation. For example, input/output precision of an operator (for example, a matrix multiplication operator) in neural network training is FP16. In this training mode, although a half-precision floating-point number (for example, FP16) occupies small storage space, a throughput of operator (for example, the matrix multiplication operator) calculation is greatly improved, and model training time is shortened. However, training precision of the neural network is reduced because precision of the half-precision floating-point number (for example, FP16) is low. A main difference herein is that the input/output precision of the matrix multiplication operator is FP16.

In another related technical solution, a neural network is trained using a plurality of precision modes throughout an entire training process of a neural network model, with repeated switching between the plurality of precision training modes. Such repeated switching prolongs the training's cycle of the neural network model, and consequently, increases overall training time of the model.

In view of this, an embodiment of this application provides a model training method. In the method, a training mode with lower precision is used for training in the former part of an entire training periodicity of a model, and a training mode with higher precision is used for training in the latter part of the entire training periodicity of the model. In this way, training duration of the model can be shortened when it is ensured that training precision of a neural network is not reduced.

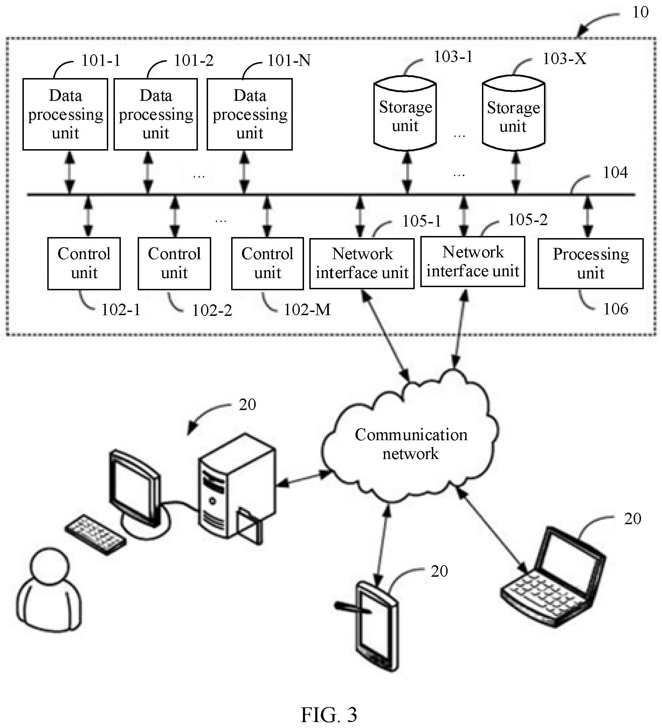

For ease of description, the following first describes, with reference to FIG. 3, an application scenario applicable to the technical solutions in embodiments of this application. It should be understood that the application scenario described below is merely used to describe embodiments of this application, but are not limited thereto. During specific implementation, the technical solutions provided in embodiments of this application may be flexibly applied based on an actual requirement.

Refer to FIG. 3. The application scenario includes a model training system 10 and a terminal device 20. The terminal device 20 and the model training system 10 are communicatively connected by using a network. The terminal device 20 is a user-side device. A user that needs to perform model training may log in to the model training system 10 by using the terminal device 20.

The model training system 10 includes a plurality of data processing units 101, for example, a data processing unit 101-1, a data processing unit 101-2, ..., and a data processing unit 101-N shown in FIG. 3. In the model training system 10, at least one control unit 102, for example, a control unit 102-1, a control unit 102-2, ..., and a control unit 102-M shown in FIG. 3, and at least one storage unit 103 configured to store data, for example, a storage unit 103-1, ..., and a storage unit 103-X, further need to be disposed. The model training system 10 communicates with the terminal device 20 through a network interface unit 105. The network interface unit 105 is, for example, a network interface unit 105-1 and a network interface unit 105-2 shown in FIG. 3. The model training system 10 further includes at least one processing unit 106, and the units may be communicatively connected through a bus 104. In the application scenario shown in FIG. 3, the units are close to each other, and may be connected through a bus. If the units are distributed in different regions, the units may be connected by using a network for remote communication. In the application scenario shown in FIG. 3, the processing unit 106 may control other units (including the data processing unit 101, the control unit 102, the network interface unit 105, the storage unit 103, and the like) in the model training system 10 through the bus 104. One control unit 102 may execute one training task delivered by the processing unit 106. One control unit 102 may simultaneously call a plurality of data processing units 101, to coordinate the plurality of data processing units 101 to jointly complete one training task. The processing unit 106 and a plurality of control units 102 may be combined. The storage unit 103 is configured to store sample data and a deep learning model, and may be further configured to store other data that needs to be stored in the model training system 10, for example, some intermediate data generated in a training process, user information, a training task corresponding to a user, and a system parameter.

The user may log in to the model training system 10 by using the terminal device 20. The model training system 10 displays, to the user by using the terminal device 20, an online service that can be purchased for model training. Displayed content includes information such as a quantity of compute resources that can be called by each online service, training precision, a training speed, and a service price. The user may purchase a proper online service based on a user requirement. The terminal device 20 sends, to the processing unit 106 through the network interface unit 105, an online service purchased by the user. The processing unit 106 generates a corresponding training task based on the online service purchased by the user, and configures corresponding quantities of data processing units 101 and control units 102 for the training task. The user may perform model training by using the data processing units 101 and the control units 102 that are configured for the user.

After the user purchases the online service, the model training system 10 provides, for the user by using the terminal device 20, an interface for uploading a deep learning model and sample data, so that the user uploads, to the model training system 10 through the interface displayed on the terminal device 20, the deep learning model that needs to be trained and the sample data for training, and the processing unit 106 stores the uploaded deep learning model and the uploaded sample data into the storage unit 103. In addition, the user may further set, by using the terminal device 20, a configuration parameter of the training task corresponding to the purchased online service, and the like. Certainly, the storage unit 103 of the model training system 10 may further pre-store shared sample data and some general deep learning models for use by the user. The user may choose to use the sample data and the deep learning model that are provided by the model training system 10. The processing unit 106 further needs to configure, for the training task, a storage address of the sample data and the deep learning model that are uploaded or selected by the user. Certainly, the sample data and the configuration parameter may alternatively be provided by the training system 10, and do not need to be input by the user.

After configuring each parameter of the training task, the processing unit 106 imports the configuration parameter into the corresponding control unit 102. The control unit 102 calls the corresponding data processing unit 101, and controls the data processing unit 101 to train the deep learning model by using the sample data. Specifically, the data processing unit 101 reads the deep learning model and the sample data from the corresponding storage unit 103 based on the configured storage address, and trains the deep learning model by using the sample data. After training is completed, a trained deep learning model is stored into the corresponding storage unit 103. In addition, the processing unit 106 ends the training task, and releases the corresponding data processing unit 101 and control unit 102. After training is completed, the processing unit 106 may send, to the terminal device 20 over the network, training completion prompt information. The user may log in to the model training system 10 again by using the terminal device 20, and access, through the network interface unit 105, the storage unit 103 corresponding to a user account, to obtain the trained deep learning model.

In the foregoing application scenario, the terminal device 20 and the model training system 10 are communicatively connected over the network. The network may be a local area network, a wide area network, or the like. The terminal device 20 may be a mobile phone, a tablet computer, a palmtop computer (personal digital assistant, PDA), a notebook computer, a personal computer, or the like. Regardless of the type of terminal device, the user may log in to the model training system 10 by using a client that is installed in the terminal device 20, or may access a home page of the model training system 10 by using a browser in the terminal device 20, and log in to the model training system 10 by using the home page of the model training system 10. The model training system 10 may be deployed on one server, a server cluster including several servers, or a cloud computing center.

It should be noted that, in actual application, one data processing unit may correspond to one chip, or a specified quantity of data processing units may be integrated into a same chip, and various data processing units integrated into the same chip may independently execute different computing tasks. Data processing units with same data processing precision may be integrated into a same chip, or data processing units with a plurality of types of data processing precision may be integrated into a same chip.

In embodiments of this application, the chip integrated with the data processing unit 101 may be any chip that has a computing capability of training a deep learning model, for example, a V100 chip, Vota, a neural network processing unit (neural network processing unit, NPU), a tensor processing unit (tensor processing unit, TPU), or a field programmable gate array (field programmable gate array, FPGA).

In actual application, the control unit 102 and the processing unit 106 may be central processing units (central processing unit, CPU), application-specific integrated circuits (application-specific integrated circuit, ASIC), field programmable gate arrays (field programmable gate array, FPGA), complex programmable logic devices (complex programmable logic device, CPLD), or the like. Alternatively, the control unit 102 may be a plurality of independent processes set in the processing unit 106. The processing unit 106 allocates one process to each training task, to control the plurality of data processing units 101 to execute the training task.

Certainly, the method provided in embodiments of this application is not limited to the application scenario shown in FIG. 3, and may be further used in another possible application scenario. This is not limited in embodiments of this application. Functions that can be implemented by the devices in the application scenario shown in FIG. 3 are described in subsequent method embodiments, and details are not described herein.

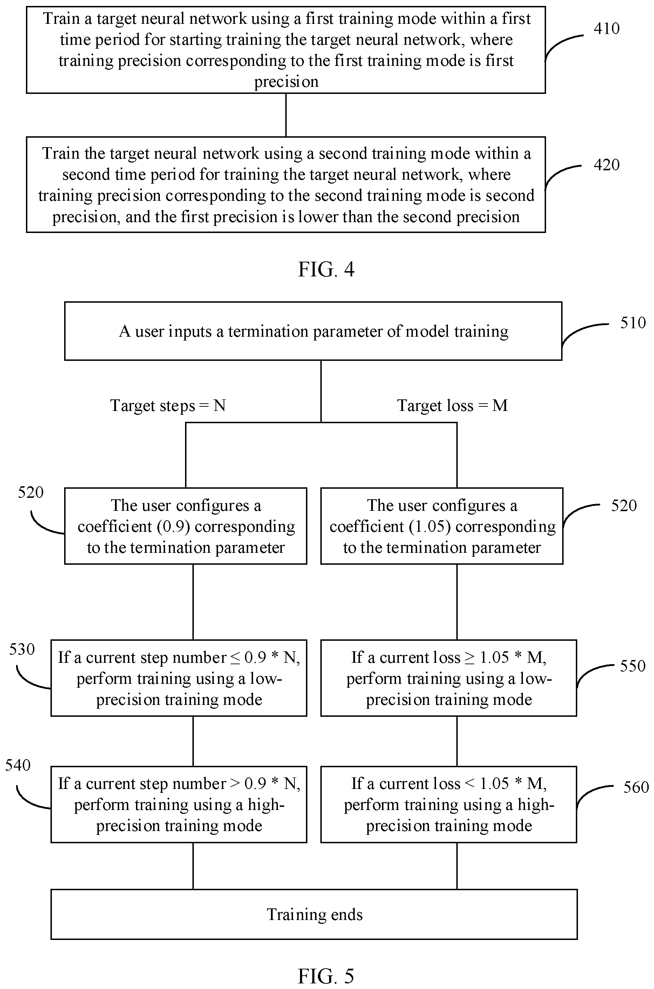

To further describe the technical solutions provided in embodiments of this application, the following describes the technical solutions in detail with reference to FIG. 4. Although embodiments of this application provide operation steps of the method shown in FIG. 4, the method may include more or fewer operation steps based on conventional or no creative effort. For steps that have no necessary causal relationship logically, a performing sequence of the steps is not limited to a performing sequence provided in embodiments of this application.

FIG. 4 is a schematic flowchart of a neural network training method according to an embodiment of this application. As shown in FIG. 4, the method may include steps 410 and 420. The following separately describes steps 410 and 420 in detail.

Step 410: Train a target neural network using a first training mode within a first time period for starting training the target neural network, where training precision corresponding to the first training mode is first precision.

In this embodiment of this application, the target neural network may be a model that is applied to different fields and used to process different tasks. For example, the model may be an image processing model, an image recognition model, an image detection model, or the like applied to the image processing field, or the model may be a speech recognition model, a speech synthesis model, or the like applied to the speech processing field, or the model may be a text processing model, a semantic understanding model, a machine translation model, or the like applied to the natural language processing field. This is not specifically limited in this application.

In this embodiment of this application, the target neural network may be trained by using the first precision within the first time period for starting training the target neural network, and the training precision corresponding to the first training mode is the first precision.

Step 420: Train the target neural network using a second training mode within a second time period for training the target neural network, where training precision corresponding to the second training mode is second precision, and the first precision is lower than the second precision.

In this embodiment of this application, within the second time period for training the target neural network, the target neural network may be trained by using the second precision until training of the target neural network ends.

In a specific implementation, the first precision corresponds to a low-precision model compiled by the target neural network, and the second precision corresponds to a high-precision model compiled by the target neural network. The compiled low-precision model is trained in the first training mode within the first time period, where precision of an operator included in the compiled low-precision model is the first precision. Specifically, in an example, input/output precision of the operator in the compiled low-precision model is the first precision. The compiled high-precision model is trained in the second training mode within the second time period, where precision of an operator included in the compiled high-precision model is the second precision. Specifically, in an example, input/output precision of the operator in the compiled high-precision model is the second precision.

For example, the operator may include but is not limited to a matrix multiplication operator.

For example, the foregoing compiled model (the compiled low-precision model or the compiled high-precision model) may be a computation graph compiled by the target neural network, or may be a program compiled by the target neural network. This is not specifically limited in this application.

It should be understood that a start moment of the first time period is a start moment of training the target neural network, and an end moment of the first time period is a start moment of the second time period. The start moment of the second time period is the end moment of the first time period, and an end moment of the second time period is an end moment of training the target neural network.

In an example, time indicated by the second time period is shorter than time indicated by the first time period, that is, the first time period is longer than the second time period. For example, the first time period accounts for more than 50% of a sum of the first time period and the second time period. Preferably, the first time period accounts for 80% to 90% of a sum of the first time period and the second time period.

It should be understood that the sum of the first time period and the second time period is entire training time of the target neural network.

It should be further understood that the end moment of training the target neural network means that performance of a trained target neural network meets a condition. For example, the target neural network may be tested by using a test sample. If a test result indicates that accuracy of the target neural network reaches preset accuracy, it may be considered that the target neural network meets a training end condition. For another example, the training end condition herein may alternatively mean that a step of training the target neural network reaches a preset quantity of steps. For example, assuming that the preset quantity of steps is 500, after completing training of a 500th step for the target neural network, a server may consider that the target neural network meets the training end condition. Certainly, in actual application, the training end condition may alternatively be another condition. The training end condition is not specifically limited herein in this application.

The training precision is precision corresponding to a data type of the target neural network in a training process. That the first precision is lower than the second precision means that precision corresponding to a data type used by an operator of the target neural network in the training process within the first time period is lower than precision corresponding to a data type used by an operator of the target neural network in the training process within the second time period.

For example, the operator may include but is not limited to the matrix multiplication operator.

The data type is not specifically limited in this embodiment of this application. The data type may include but is not limited to int1, int2, int3, int4, int5, int6, int7, int8, hif8, fp8, bf16, fp16, int16, int32, fp32, fp64, int64, and the like. Precision corresponding to these data types increases sequentially from left to right. For example, precision of int1 is lower than precision of int2, precision of hif8 is lower than precision of fp16, precision of bfl6 is lower than precision of fp32, and precision of fp32 is lower than precision of fp64. In this way, in different chips, even if precision ranges supported by the chips are different, the method provided in this embodiment of this application may also be used to perform downgraded training. Same bit quantities herein are considered as same precision levels.

The following describes some of the foregoing data types.

bf16 is a half-precision number, that is, a half-precision floating-point number, and is a binary floating-point number data type used by a computer. The half-precision number is stored in 2 bytes (16 bits). In IEEE 754-2008, the half-precision floating-point number is referred to as binary16. The half-precision number is suitable for storing data that does not require high precision.

fp32 is a single-precision number, that is, a single-precision floating-point number (single), is also a binary floating-point number data type used by the computer, and is stored in the computer as an IEEE 32-bit (4-byte) floating-point number. A value range of the single-precision number is from -3.402823E38 to -1.401298E-45 for negative values, and from 1.401298E-45 to 3.402823E38 for positive values.

fp64 is a double-precision number, that is, a double-precision floating-point number (double), and is also a binary floating-point number data type used by the computer. 64 bits (8 bytes) is used to store a floating-point number. The double-precision number may represent 15 or 16 decimal significant figures. An absolute value range of the number represented by the double-precision number is approximately $2.23 \times 10^{-308}$ to $1.79 \times 10^{308}$.

In this embodiment of this application, precision of data in the first training mode may also be referred to as low precision, and precision of data in the second training mode may also be referred to as high precision. The low precision and the high precision may differ by one precision level, or may differ by a plurality of precision levels. This is not specifically limited in this embodiment of this application.

It should be noted that the low precision may be single low precision, or may be a combination of a plurality of pieces of low precision. The high precision may be single high precision, or may be a combination of a plurality of pieces of high precision. This is not specifically limited in this embodiment of this application, provided that the precision corresponding to the second training mode is higher than the precision corresponding to the first training mode. In this way, requirements of different users on training precision and training duration can be met.

For example, the high precision and the low precision may be randomly selected and combined from the following: int1, int2, int3, int4, int5, int6, int7, int8, hif8, fp8, bf16, fpl6, int16, int32, fp32, fp64, int64, and the like. It should be understood that, specifically, during selection, the high precision is precision that is input by the user and that is of a neural network model to be trained, and the high precision is high precision that can be supported by a chip for training the neural network model. The low precision is low precision that is input by the user and that can be supported by a chip for training the neural network model.

For example, within the first time period, the target neural network is trained by using precision of hif8, and within the second time period, the target neural network is trained by using precision of fp64. For another example, within the first time period, the target neural network is trained by using precision of fp16, and within the second time period, the target neural network is trained by using precision of fp32. For another example, within the first time period, the target neural network is trained by using precision of bf16, and within the second time period, the target neural network is trained by using precision of bf32. For another example, within the first time period, the target neural network is trained by using precision of fp16, and within the second time period, the target neural network is trained by using precision of bf32. For another example, within the first time period, the target neural network is trained by using precision of bf16, and within the second time period, the target neural network is trained by using precision of fp32.

In this embodiment of this application, a training mode with lower precision is used for training in the former time period of an entire training periodicity of the target neural network, and a training mode with higher precision is used for training in the latter time period. Because a weight gradient (a weight change rate) is large in an early phase of training the target neural network, when the target neural network is trained in the training mode with the low precision, training precision of the target neural network is not affected, and because small storage space is occupied by a low-precision parameter, a computing throughput is greatly improved, thereby shortening training time of the target neural network. Therefore, for the entire training periodicity of the target neural network, training duration of the target neural network may be shortened while it is ensured that training precision of the target neural network is not reduced.

In this embodiment of this application, a current value and a target value of a parameter of training the target neural network may be further obtained, whether current training of the target neural network is within the first time period or the second time period is determined based on a ratio of the current value to the target value of the parameter of training the target neural network, and then the target neural network may be trained by using corresponding training precision in a corresponding time period.

It should be understood that the parameter is not specifically limited in this embodiment of this application, provided that the parameter may represent a training time dimension in a process of training the target neural network. For example, the parameter may include but is not limited to at least one of the following: an epoch epoch, a step step, and a loss loss.

The epoch epoch indicates a training process in which all samples in a training dataset are passed through once (only once). In an epoch, a training algorithm inputs all samples into the model in a specified sequence for forward propagation, loss calculation, back propagation, and parameter update. An epoch usually contains a plurality of steps steps.

The step step indicates that the model performs one parameter update operation in an epoch. To be specific, in a training process, each time training of a batch batch of data is completed, a step is completed. A batch indicates a group of samples that are input into the model at a time. In a process of training a neural network, there are usually a large amount of training data, for example, tens of thousands or even hundreds of thousands of pieces of data. If all the tens of thousands of pieces of data are put into a model at a time, requirements on computer performance a learning capability of the neural network model, and the like are very high. In this case, the training data may be divided into a plurality of batches, and then samples of each batch are input into the model in batches for forward propagation, loss calculation, back propagation, and parameter update.

The loss loss represents a difference or an error between a predicted result of the training data and an actual result of the training data. For specific descriptions of the loss loss, refer to the foregoing descriptions. Details are not described herein again.

An implementation of determining, based on the ratio of the current value to the target value of the parameter of training the target neural network, whether current training of the target neural network is within the first time period or the second time period is: determining, based on that the ratio of the current value to the target value of the parameter meets a first preset condition, that current training of the target neural network is within the first time period; or determining, based on that the ratio of the current value to the target value of the parameter meets a second preset condition, that current training of the target neural network is within the second time period. The following describes this implementation in detail with reference to FIG. 5.

In an example, it is assumed that the parameter is the epoch, the first preset condition is that a ratio of a current value of the epoch to a target value of the epoch is less than or equal to a first coefficient, and the second preset condition is that the ratio of the current value of the epoch to the target value of the epoch is greater than the first coefficient.

In another example, it is assumed that the parameter is the epoch, the first preset condition is that a ratio of a current value of the epoch to a target value of the epoch is less than a first coefficient, and the second preset condition is that the ratio of the current value of the epoch to the target value of the epoch is greater than or equal to the first coefficient.

In another example, it is assumed that the parameter is the step, the first preset condition is that a ratio of a current value of the step to a target value of the step is less than or equal to a second coefficient, and the second preset condition is that the ratio of the current value of the step to the target value of the step is greater than the second coefficient.

In another example, it is assumed that the parameter is the step, the first preset condition is that a ratio of a current value of the step to a target value of the step is less than a second coefficient, and the second preset condition is that the ratio of the current value of the step to the target value of the step is greater than or equal to the second coefficient.

In another example, it is assumed that the parameter is the loss, the first preset condition is that a ratio of a current value of the loss to a target value of the loss is greater than or equal to a third coefficient, and the second preset condition is that the ratio of the current value of the loss to the target value of the loss is less than the third coefficient.

In another example, it is assumed that the parameter is the loss, the first preset condition is that a ratio of a current value of the loss to a target value of the loss is greater than a third coefficient, and the second preset condition is that the ratio of the current value of the loss to the target value of the loss is less than or equal to the third coefficient.

It should be noted that the foregoing coefficients (including the first coefficient, the second coefficient, and the third coefficient) may be configured by a user by using a client, or may be automatically configured by a system by default. In an implementation in which the system automatically configures the foregoing coefficients (including the first coefficient, the second coefficient, and the third coefficient) by default, the user does not need to configure the foregoing coefficients, so that the user does not perceive different training modes used within the first time period and the second time period respectively, to improve user experience.

For example, the first coefficient is a value between 0 and 1, the second coefficient is a value between 0 and 1, and the third coefficient is a number greater than 1.

FIG. 5 is a schematic flowchart of another neural network training method according to an embodiment of this application. As shown in FIG. 5, the method may include steps 510 to 560. The following separately describes steps 510 to 560 in detail.

Step 510: A user inputs a termination parameter of model training.

For example, the user may input the termination parameter of model training to a model training system 10 by using a terminal device 20, where the termination parameter indicates that the model training ends. The termination parameter may be, for example, a target epoch/steps or a target loss (final loss).

Step 520: The user configures a coefficient corresponding to the termination parameter.

For example, the user may input, to the model training system 10 by using the terminal device 20, the coefficient corresponding to the termination parameter.

For example, the termination parameter is the target steps. A value range of a coefficient that may be configured by the user is [0.2, 0.9]. The user may select a coefficient from the value range and input the coefficient into the model training system 10. If the user does not configure the coefficient, the model training system 10 may select a default parameter 0.9.

For example, the termination parameter is the target loss. A value range of a coefficient that may be configured by the user is a number greater than 1. The user may select a coefficient from the value range and input the coefficient into the model training system 10. If the user does not configure the coefficient, the model training system 10 may select a default parameter 1.05.

For ease of description, if the termination parameter is the target steps, the coefficient corresponding to the termination parameter configured by the user is 0.9. If the termination parameter is the target loss, the coefficient corresponding to the termination parameter configured by the user is 1.05.

For example, it is assumed that a value of the target steps input by the user is N, and a value of the target loss is M.

The following describes, with reference to steps 530 and 540, a case in which the termination parameter is the target steps.

Step 530: If a current step number $\leq 0.9 * N$, perform training using a low-precision training mode.

For example, if the current step number obtained by the model training system 10 is less than or equal to $0.9 * N$, it may be determined that current time is within the foregoing first time period, and a neural network model may be trained using the low-precision training mode.

Step 540: If a current step number $> 0.9 * N$, perform training using a high-precision training mode.

For example, if the current step number obtained by the model training system 10 is greater than $0.9 * N$, it may be determined that current time is within the foregoing second time period, and a neural network model may be trained using the high-precision training mode.

The following describes, with reference to steps 550 and 560, a case in which the termination parameter is the final loss.

Step 550: If a current loss $\geq 1.05 * M$, perform training using a low-precision training mode.

For example, if the current loss obtained by the model training system $10 \geq 1.05 * M$, it may be determined that current time is within the foregoing first time period, and a neural network model may be trained using the low-precision training mode.

Step 560: If a current loss $< 1.05 * M$, perform training using a high-precision training mode.

For example, if the current loss obtained by the model training system $10 < 1.05 * M$, it may be determined that current time is within the foregoing second time period, and a neural network model may be trained using the high-precision training mode.

For example, the following lists pseudo-code for implementing the method shown in FIG. 5.

1. An experiment option is added to an adaptation layer of a software stack:

- accelerate {fast/ultrafast/fastl/ultrafastl } {step/loss} [ratio0.2~0.9/1.05] (for no setting, a default value is used)

2. An API is added to the adaptation layer of the software stack:

```
train_accelerate(step, steps)
train_accelerate(now_loss, final_loss)
if (loss > 1.05 * final_loss)
    set precision_mode = allow_mix_precision_fp16
else
    set precision_mode = fp32
```

3. Each step in a user script calls the api:

```
train_accelerate (step, iteration_per_loop, 10000)
train_accelerate (now_loss, final_loss)
```

For example, the following lists other pseudo-code for implementing the method shown in FIG. 5.

1. An experiment option is added to an adaptation layer of a software stack:

- accelerate [fast/ultrafast/fastl/ultrafast1] {step/loss} [0.2~0.9] (for no setting, a default value is used)

2. In a training script, set two environment variables accelerate_var equal to step, iteration_per_loop in the for loop, epochs/now_loss, final_loss (stop criterion)
the user is enabled to set an environment variable:

(1) if determining is performed based on the step: set an environment variable of the step: step, epochs (0.9)
(2) if determining is performed based on the loss: set an environment variable of the loss: now_loss, final loss

3. The environment variable is obtained from the adaptation layer of the software stack:

(1) get (accelerate_var)
(2) if (accelerate_var $\leq$ 0.9 steps)

```
    set precision_mode = mix_precision
    else
    set precision_mode = fp32
```

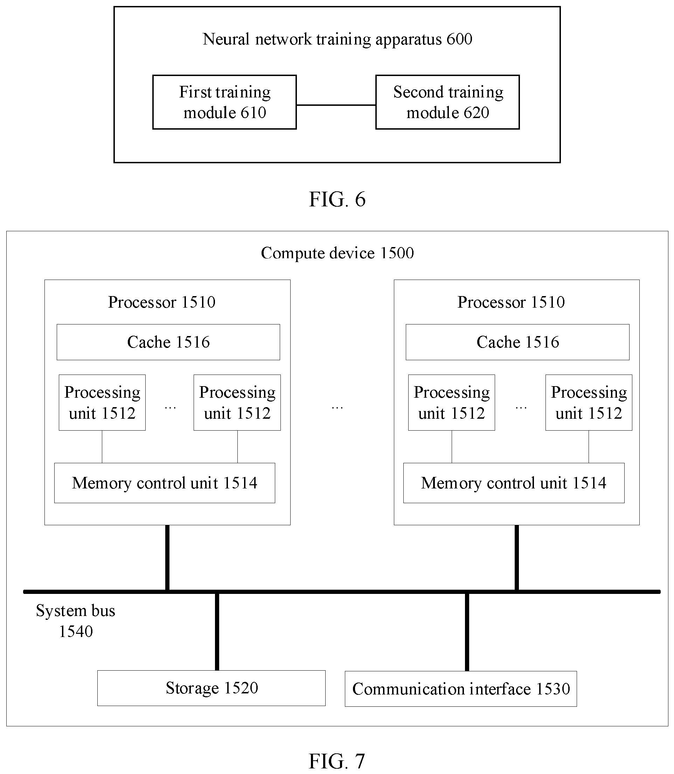

The foregoing describes in detail the method provided in embodiments of this application with reference to FIG. 1 to FIG. 5. The following describes in detail apparatus embodiments in this application with reference to FIG. 6 and FIG. 7. It should be understood that descriptions of the method embodiments correspond to descriptions of the apparatus embodiments. Therefore, for a part that is not described in detail, refer to the foregoing method embodiments.

FIG. 6 is a block diagram of a neural network training apparatus 600 according to an embodiment of this application. The apparatus 600 may be implemented by software, hardware, or a combination of software and hardware. The apparatus 600 provided in this embodiment of this application may implement the method procedure shown in FIG. 4 or FIG. 5 in embodiments of this application. The apparatus 600 includes a first training module 610 and a second training module 620. The first training module 610 is configured to train a target neural network using a first training mode within a first time period for starting training the target neural network, where training precision corresponding to the first training mode is first precision. The second training module 620 is configured to train the target neural network using a second training mode within a second time period for training the target neural network, where training precision corresponding to the second training mode is second precision, the first precision is lower than the second precision, a start moment of the second time period is an end moment of the first time period, and an end moment of the second time period is a training end moment of the target neural network.

Optionally, the apparatus 600 further includes an obtaining module and a determining module. The obtaining module is configured to obtain a current value and a target value of a parameter of training the target neural network, where the parameter is a parameter representing a training time dimension in a process of training the target neural network. The determining module is configured to determine, based on a ratio of the current value to the target value of the parameter meeting a first preset condition, that current training of the target neural network is within the first time period. Alternatively, the determining module is configured to determine, based on a ratio of the current value to the target value of the parameter meeting a second preset condition, that current training of the target neural network is within the second time period.

Optionally, the parameter of training the target neural network includes at least one of the following: an epoch epoch, a step step, and a loss loss.

Optionally, the parameter is the epoch, the first preset condition is that a ratio of a current value of the epoch to a target value of the epoch is less than or equal to a first coefficient, and the second preset condition is that the ratio of the current value of the epoch to the target value of the epoch is greater than the first coefficient.

Optionally, the parameter is the epoch, the first preset condition is that a ratio of a current value of the epoch to a target value of the epoch is less than a first coefficient, and the second preset condition is that the ratio of the current value of the epoch to the target value of the epoch is greater than or equal to the first coefficient.

Optionally, the first coefficient is a value between 0 and 1.

Optionally, the parameter is the step, the first preset condition is that a ratio of a current value of the step to a target value of the step is less than or equal to a second coefficient, and the second preset condition is that the ratio of the current value of the step to the target value of the step is greater than the second coefficient.

Optionally, the parameter is the step, the first preset condition is that a ratio of a current value of the step to a target value of the step is less than a second coefficient, and the second preset condition is that the ratio of the current value of the step to the target value of the step is greater than or equal to the second coefficient.

Optionally, the second coefficient is a value between 0 and 1.

Optionally, the parameter is the loss, the first preset condition is that a ratio of a current value of the loss to a target value of the loss is greater than or equal to a third coefficient, and the second preset condition is that the ratio of the current value of the loss to the target value of the loss is less than the third coefficient.

Optionally, the parameter is the loss, the first preset condition is that a ratio of a current value of the loss to a target value of the loss is greater than a third coefficient, and the second preset condition is that the ratio of the current value of the loss to the target value of the loss is less than or equal to the third coefficient.

Optionally, the third coefficient is a number greater than 1.

Optionally, the foregoing coefficients (including the first coefficient, the second coefficient, and the third coefficient) may be configured by a user by using a client.

Optionally, the foregoing coefficients (including the first coefficient, the second coefficient, and the third coefficient) may alternatively be automatically defaulted by a system. In this way, the user does not need to configure the coefficients, so that the user does not perceive different training modes used within the first time period and the second time period respectively, to improve user experience.

Optionally, the first precision corresponds to a low-precision model compiled by the target neural network, and the second precision corresponds to a high-precision model compiled by the target neural network. The first training module 610 is specifically configured to train the compiled low-precision model in the first training mode within the first time period. The second training module 620 is specifically configured to train the compiled high-precision model in the second training mode within the second time period.

Optionally, precision of an operator included in the compiled low-precision model is the first precision. Specifically, for example, input precision and/or output precision of the operator in the compiled low-precision model are/is the first precision.

Optionally, precision of an operator included in the compiled high-precision model is the second precision. Specifically, for example, input precision and/or output precision of the operator in the compiled high-precision model are/is the second precision.

Optionally, the operator may include but is not limited to a matrix multiplication operator.

The apparatus 600 herein may be presented in a form of functional module. The term "module" herein may be implemented in a form of software and/or hardware. This is not specifically limited. For example, the "module" may be a software program, a hardware circuit, or a combination thereof that implements the foregoing functions. The "module" is used as an example of a hardware functional unit, and the "module" may include at least one compute device, for example, a server. Alternatively, the "module" may be a device or the like that is implemented by using an application-specific integrated circuit (application-specific integrated circuit, ASIC) or a programmable logic device (programmable logic device, PLD). The PLD may be implemented by using a complex programmable logic device (complex programmable logic device, CPLD), a field-programmable gate array (field-programmable gate array, FPGA), a generic array logic (generic array logic, GAL), or any combination thereof.

Modules in the examples described in embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

The apparatus provided in this embodiment of this application and the foregoing method use a same inventive concept, and can achieve a same beneficial effect. Details are not described herein again.

All related content of the steps in the foregoing method embodiments may be referenced to function descriptions of functional modules corresponding to the apparatus in this embodiment of this application. Details are not described herein again.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Based on a same inventive concept as the foregoing method, an embodiment of this application further provides a compute device. The method provided in embodiments of this application may be performed by the compute device, and the compute device may also be referred to as a computer system. The compute device includes a hardware layer, an operating system layer running above the hardware layer, and an application layer running above the operating system layer. The hardware layer includes hardware, for example, a processing unit, a memory, and a memory control unit. Subsequently, functions and a structure of the hardware are described in detail. An operating system is any one or more computer operating systems through a process (process), for example, a Linux operating system, a Unix operating system, an Android operating system, an iOS operating system, or a Windows operating system, that implement service processing. The application layer includes applications such as a browser, an address book, word processing software, and instant messaging software. In addition, optionally, the computer system is a handheld device, for example, a smartphone, or a terminal device, for example, a personal computer. This is not particularly limited in this application, provided that the method provided in embodiments of this application can be implemented. The method provided in embodiments of this application may be performed by the compute device or a functional module that is in the compute device and that can invoke and execute a program.

For example, specifically, the compute device may be a device or a system (not shown in FIG. 3) configured to perform model training in the model training system 10.

A compute device according to an embodiment of this application is described below in detail with reference to FIG. 7.

FIG. 7 is a diagram of an architecture of a compute device 1500 according to an embodiment of this application. The compute device 1500 may be a server, a computer, or another device with a computing capability. The compute device 1500 shown in FIG. 7 includes at least one processor 1510 and a storage 1520.

It should be understood that quantities of processors and storages in the compute device 1500 are not limited in this application.

The processor 1510 executes instructions in the storage 1520, so that the compute device 1500 implements the method provided in this application. Alternatively, the processor 1510 executes instructions in the storage 1520, so that the compute device 1500 implements the functional modules provided in this application, to implement the method provided in this application.

Optionally, the compute device 1500 further includes a communication interface 1530. The communication interface 1530 uses a transceiver module, for example but not limited to, a network interface card or a transceiver, to implement communication between the compute device 1500 and another device or a communication network.

Optionally, the compute device 1500 further includes a system bus 1540. The processor 1510, the storage 1520, and the communication interface 1530 are separately connected to the system bus 1540. The processor 1510 can access the storage 1520 through the system bus 1540. For example, the processor 1510 can read and write data or execute code in the storage 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one bold line is used for representation in FIG. 7, but this does not mean that there is only one bus or only one type of bus.

In a possible implementation, a function of the processor 1510 is mainly to interpret instructions (or code) of a computer program and process data in computer software. The instructions of the computer program and the data in the computer software can be stored in the storage 1520 or a cache 1516.

Optionally, the processor 1510 may be an integrated circuit chip and has a signal processing capability. By way of example and not limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware assembly. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All calculation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1514 is configured to control data exchange between the storage 1520 and the processing unit 1512. Specifically, the memory control unit 1514 receives a memory access request from the processing unit 1512, and controls access to a memory based on the memory access request. By way of example and not limitation, the memory control unit is a component, for example, a memory management unit (memory management unit, MMU).

In an implementation example, each memory control unit 1514 performs addressing for the storage 1520 through the system bus. In addition, an arbiter (not shown in FIG. 7) is configured in the system bus, and the arbiter is responsible for processing and coordinating contention-based access of a plurality of processing units 1512.

In an implementation example, the processing unit 1512 is in communication connection with the memory control unit 1514 through a connection line inside a chip, for example, an address line, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for required data. If the required data is found, the processing unit 1512 directly reads the data. If the required data is not found, the processing unit 1512 searches the storage for the required data. Because the cache runs much faster than the storage, a function of the cache is to help the processing unit 1512 run faster.

The storage 1520 can provide running space for a process in the compute device 1500. For example, the storage 1520 stores a computer program (specifically, code of the program) for generating the process. After the computer program is run by the processor to generate the process, the processor allocates corresponding storage space to the process in the storage 1520. Further, the storage space further includes a text segment, an initial data segment, an uninitialized data segment, a stack segment, a heap segment, and the like. The storage 1520 stores, in the storage space corresponding to the process, data generated during running of the process, for example, intermediate data or process data.

Optionally, the storage is also referred to as a memory, and a function of the storage is to temporarily store operation data in the processor 1510 and data exchanged with an external storage such as a hard disk. Provided that a computer runs, the processor 1510 schedules, to the memory for an operation, data on which the operation needs to be performed, and the processing unit 1512 sends a result after the operation is completed.

By way of example and not limitation, the storage 1520 is a volatile memory or a non-volatile memory, or may include both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the storage 1520 in the system and method described in this specification is intended to include but is not limited to these storages and any storage of another proper type.

The listed structure of the compute device 1500 is merely an example for description, and this application is not limited thereto. The compute device 1500 in this embodiment of this application includes various types of hardware in a computer system in the conventional technology. For example, the compute device 1500 further includes a storage other than the storage 1520, for example, a magnetic disk storage. A person skilled in the art should understand that the compute device 1500 may further include another component required for implementing normal running. In addition, a person skilled in the art should understand that, based on a specific requirement, the compute device 1500 may further include a hardware component implementing another additional function. In addition, a person skilled in the art should understand that the compute device 1500 may alternatively include only a component required for implementing embodiments of this application, but not necessarily include all the components shown in FIG. 7.

An embodiment of this application further provides a compute device cluster. The compute device cluster includes at least one compute device. The compute device may be a server. In some embodiments, the compute device may alternatively be a terminal device like a desktop computer, a notebook computer, or a smartphone.

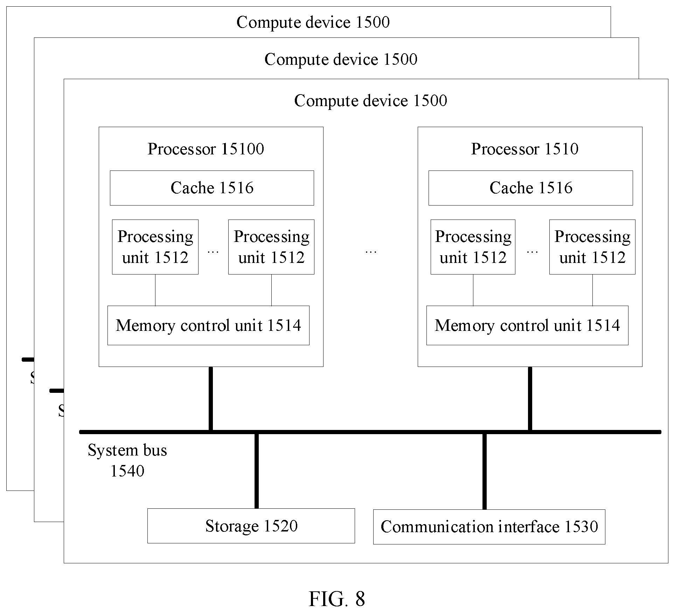

As shown in FIG. 8, the compute device cluster includes at least one compute device 1500. A storage 1520 of one or more compute devices 1500 in the compute device cluster may store same instructions for performing the foregoing method.

In some possible implementations, alternatively, the storage 1520 of the one or more compute devices 1500 in the compute device cluster may separately store some instructions for performing the foregoing method. In other words, a combination of the one or more compute devices 1500 may jointly execute the instructions of the foregoing method.

It should be noted that storages 1520 in different compute devices 1500 in the compute device cluster may store different instructions respectively used to perform some functions of the foregoing apparatus. In other words, the instructions stored in the storages 1520 in the different compute devices 1500 may implement functions of one or more modules in the foregoing apparatus.

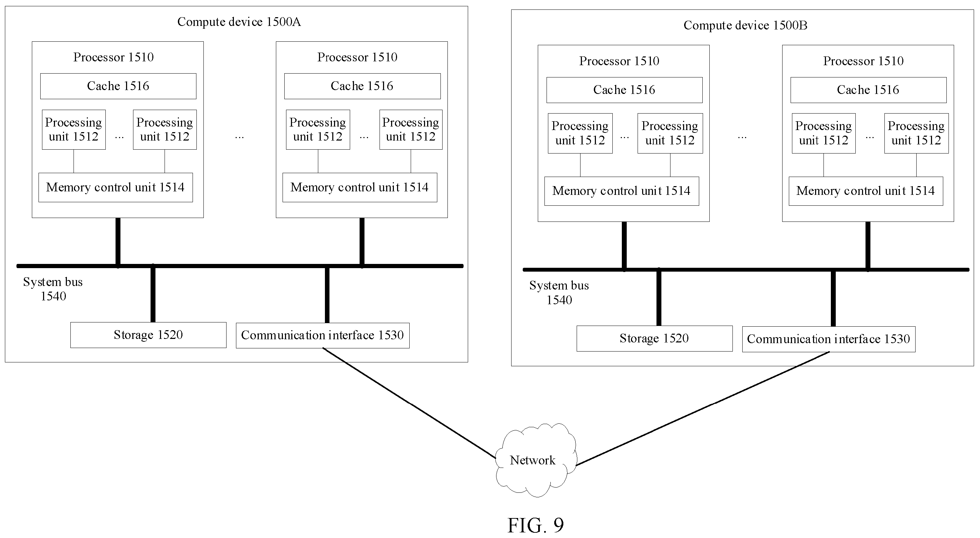

In some possible implementations, the one or more compute devices in the compute device cluster may be connected through a network. The network may be a wide area network, a local area network, or the like. FIG. 9 shows a possible implementation. As shown in FIG. 9, two compute devices 1500A and 1500B are connected through a network. Specifically, each compute device is connected to the network through a communication interface in the compute device.

It should be understood that functions of the compute device 1500A shown in FIG. 9 may alternatively be completed by a plurality of compute devices 1500. Similarly, functions of the compute device 1500B may alternatively be completed by a plurality of compute devices 1500.

In this embodiment, a computer program product including instructions is further provided. The computer program product may be software or a program product that includes instructions and that can be executable on a compute device or be stored in any usable medium. When the computer program product runs on the compute device, the compute device is enabled to perform the method provided above, or the compute device is enabled to implement functions of the apparatus provided above.

In this embodiment, a computer-readable storage medium is further provided. The computer-readable storage medium may be any usable medium that can be stored by a compute device, or a data storage device such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. When the instructions in the computer-readable storage medium are executed on the compute device, the compute device is enabled to perform the method provided above.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A neural network training method, comprising:

training a target neural network using a first training mode within a first time period for starting training the target neural network, wherein training precision corresponding to the first training mode is first precision; and training the target neural network using a second training mode within a second time period for training the target neural network, wherein training precision corresponding to the second training mode is second precision, the first precision is lower than the second precision, a start moment of the second time period is an end moment of the first time period, and an end moment of the second time period is a training end moment of the target neural network.

2. The method according to claim 1, wherein the method further comprises:

obtaining a current value and a target value of a parameter of training the target neural network, wherein the parameter is a parameter representing a training time dimension in a process of training the target neural network; and
determining, based on a ratio of the current value to the target value of the parameter meeting a first preset condition, that current training of the target neural network is within the first time period; or
determining, based on a ratio of the current value to the target value of the parameter meeting a second preset condition, that current training of the target neural network is within the second time period.

3. The method according to claim 2, wherein the parameter of training the target neural network comprises at least one of the following: an epoch epoch, a step step, and a loss loss.

4. The method according to claim 3, wherein the parameter is the epoch, the first preset condition is that a ratio of a current value of the epoch to a target value of the epoch is less than or equal to a first coefficient, and the second preset condition is that the ratio of the current value of the epoch to the target value of the epoch is greater than the first coefficient.

5. The method according to claim 3, wherein the parameter is the epoch, the first preset condition is that a ratio of a current value of the epoch to a target value of the epoch is less than a first coefficient, and the second preset condition is that the ratio of the current value of the epoch to the target value of the epoch is greater than or equal to the first coefficient.

6. The method according to claim 3, wherein the parameter is the step, the first preset condition is that a ratio of a current value of the step to a target value of the step is less than or equal to a second coefficient, and the second preset condition is that the ratio of the current value of the step to the target value of the step is greater than the second coefficient.

7. The method according to claim 3, wherein the parameter is the step, the first preset condition is that a ratio of a current value of the step to a target value of the step is less than a second coefficient, and the second preset condition is that the ratio of the current value of the step to the target value of the step is greater than or equal to the second coefficient.

8. The method according to claim 3, wherein the parameter is the loss, the first preset condition is that a ratio of a current value of the loss to a target value of the loss is greater than or equal to a third coefficient, and the second preset condition is that the ratio of the current value of the loss to the target value of the loss is less than the third coefficient.

9. The method according to claim 3, wherein the parameter is the loss, the first preset condition is that a ratio of a current value of the loss to a target value of the loss is greater than a third coefficient, and the second preset condition is that the ratio of the current value of the loss to the target value of the loss is less than or equal to the third coefficient.

10. The method according to any one of claims 1 to 9, wherein the first precision corresponds to a low-precision model compiled by the target neural network, and the second precision corresponds to a high-precision model compiled by the target neural network;
the training the target neural network in the first training mode within the first time period for starting training the target neural network comprises:

training the compiled low-precision model in the first training mode within the first time period; and
the training the target neural network in the second training mode within the second time period for training the target neural network comprises:
training the compiled high-precision model in the second training mode within the second time period.

**11.** A model training apparatus, comprising:

a first training module, configured to train a target neural network using a first training mode within a first time period for starting training the target neural network, wherein training precision corresponding to the first training mode is first precision; and
a second training module, configured to train the target neural network using a second training mode within a second time period for training the target neural network, wherein training precision corresponding to the second training mode is second precision, the first precision is lower than the second precision, a start moment of the second time period is an end moment of the first time period, and an end moment of the second time period is a training end moment of the target neural network.

**12.** The apparatus according to claim 11, wherein the apparatus further comprises:

an obtaining module, configured to obtain a current value and a target value of a parameter of training the target neural network, wherein the parameter is a parameter representing a training time dimension in a process of training the target neural network; and
a determining module, configured to determine, based on a ratio of the current value to the target value of the parameter meeting a first preset condition, that current training of the target neural network is within the first time period; or
the determining module, configured to determine, based on a ratio of the current value to the target value of the parameter meeting a second preset condition, that current training of the target neural network is within the second time period.

**13.** The apparatus according to claim 12, wherein the parameter of training the target neural network comprises at least one of the following: an epoch epoch, a step step, and a loss loss.

**14.** The apparatus according to claim 13, wherein the parameter is the epoch, the first preset condition is that a ratio of a current value of the epoch to a target value of the epoch is less than or equal to a first coefficient, and the second preset condition is that the ratio of the current value of the epoch to the target value of the epoch is greater than the first coefficient.

**15.** The apparatus according to claim 13, wherein the parameter is the epoch, the first preset condition is that a ratio of a current value of the epoch to a target value of the epoch is less than a first coefficient, and the second preset condition is that the ratio of the current value of the epoch to the target value of the epoch is greater than or equal to the first coefficient.

**16.** The apparatus according to claim 13, wherein the parameter is the step, the first preset condition is that a ratio of a current value of the step to a target value of the step is less than or equal to a second coefficient, and the second preset condition is that the ratio of the current value of the step to the target value of the step is greater than the second coefficient.

**17.** The apparatus according to claim 3, wherein the parameter is the step, the first preset condition is that a ratio of a current value of the step to a target value of the step is less than a second coefficient, and the second preset condition is that the ratio of the current value of the step to the target value of the step is greater than or equal to the second coefficient.

**18.** The apparatus according to claim 13, wherein the parameter is the loss, the first preset condition is that a ratio of a current value of the loss to a target value of the loss is greater than or equal to a third coefficient, and the second preset condition is that the ratio of the current value of the loss to the target value of the loss is less than the third coefficient.

**19.** The apparatus according to claim 13, wherein the parameter is the loss, the first preset condition is that a ratio of a current value of the loss to a target value of the loss is greater than a third coefficient, and the second preset condition is that the ratio of the current value of the loss to the target value of the loss is less than or equal to the third coefficient.

**20.** The apparatus according to any one of claims 11 to 19, wherein the first precision corresponds to a low-precision model compiled by the target neural network, and the second precision corresponds to a high-precision model compiled by the target neural network;

the first training module is specifically configured to train the compiled low-precision model in the first training mode within the first time period; and

the second training module is specifically configured to train the compiled high-precision model in the second training mode within the second time period.

21. A compute device, comprising a processor and a storage, wherein
the processor is configured to execute instructions stored in the storage, so that the compute device performs the method according to any one of claims 1 to 10.

22. A computer program product comprising instructions, wherein when the instructions are run by a compute device, the compute device is enabled to perform the method according to any one of claims 1 to 10.

23. A computer-readable storage medium, comprising computer program instructions, wherein when the computer program instructions are executed by a compute device, the compute device performs the method according to any one of claims 1 to 10.

**Training phase**

Model parameter update

Step

Training data (feature)

Deep learning model (prediction function)

Inference (data prediction)

Calculate a loss according to a loss function

Label

**Inference phase**

Input data

Deep learning model (with completed training)

Inference result

FIG. 1

FIG. 2

FIG. 3

Train a target neural network using a first training mode within a first time period for starting training the target neural network, where training precision corresponding to the first training mode is first precision — 410

Train the target neural network using a second training mode within a second time period for training the target neural network, where training precision corresponding to the second training mode is second precision, and the first precision is lower than the second precision — 420

FIG. 4

A user inputs a termination parameter of model training — 510

Target steps = N    Target loss = M

520 — The user configures a coefficient (0.9) corresponding to the termination parameter

The user configures a coefficient (1.05) corresponding to the termination parameter — 520

530 — If a current step number ≤ 0.9 * N, perform training using a low-precision training mode

If a current loss ≥ 1.05 * M, perform training using a low-precision training mode — 550

540 — If a current step number > 0.9 * N, perform training using a high-precision training mode

If a current loss < 1.05 * M, perform training using a high-precision training mode — 560

Training ends

FIG. 5

Neural network training apparatus 600

First training module 610

Second training module 620

FIG. 6

Compute device 1500

Processor 1510

Cache 1516

Processing unit 1512 ... Processing unit 1512

Memory control unit 1514

...

Processor 1510

Cache 1516

Processing unit 1512 ... Processing unit 1512

Memory control unit 1514

System bus 1540

Storage 1520

Communication interface 1530

FIG. 7

Compute device 1500

Compute device 1500

Compute device 1500

| Processor 15100 | Processor 1510 |
|---|---|

Cache 1516

Cache 1516

Processing unit 1512 ··· Processing unit 1512

···

Processing unit 1512 ··· Processing unit 1512

Memory control unit 1514

Memory control unit 1514

System bus 1540

Storage 1520

Communication interface 1530

FIG. 8

Compute device 1500A

Processor 1510

Cache 1516

Processing unit 1512 ... Processing unit 1512

...

Processor 1510

Cache 1516

Processing unit 1512 ... Processing unit 1512

Memory control unit 1514

Memory control unit 1514

System bus 1540

Storage 1520

Communication interface 1530

Compute device 1500B

Processor 1510

Cache 1516

Processing unit 1512 ... Processing unit 1512

...

Processor 1510

Cache 1516

Processing unit 1512 ... Processing unit 1512

Memory control unit 1514

Memory control unit 1514

System bus 1540

Storage 1520

Communication interface 1530

Network

FIG. 9

## INTERNATIONAL SEARCH REPORT

| International application No. |
|---|
| **PCT/CN2024/099303** |

**A. CLASSIFICATION OF SUBJECT MATTER**

G06N 3/08(2023.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 训练, 网络, 精度, 模式, 第一, 第二, 低, 高, 优化, 轮次, 迭代, 批次, 损失, 时间, 时长, 时间段, train+, network, precision, mode, first, second, low, high, optimization, round, iteration, batch, loss, time, duration, time period

**C. DOCUMENTS CONSIDERED TO BE RELEVANT**

| Category* | Citation of document, with indication, where appropriate, of the relevant passages | Relevant to claim No. |
|---|---|---|
| X | CN 111695688 A (TENCENT TECHNOLOGY (SHENZHEN) CO., LTD.) 22 September 2020 (2020-09-22) description, paragraphs 44-163 | 1-23 |
| A | CN 111488985 A (SOUTH CHINA UNIVERSITY OF TECHNOLOGY) 04 August 2020 (2020-08-04) entire document | 1-23 |
| A | CN 113361698 A (ALIBABA GROUP HOLDING LIMITED) 07 September 2021 (2021-09-07) entire document | 1-23 |
| A | CN 113762495 A (HEFEI INGENIC TECHNOLOGY CO., LTD.) 07 December 2021 (2021-12-07) entire document | 1-23 |
| A | CN 116660982 A (NEPU SANYA OFFSHORE OIL&GAS RESEARCH INSTITUTE) 29 August 2023 (2023-08-29) entire document | 1-23 |

☐ Further documents are listed in the continuation of Box C.    ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" | document member of the same patent family |
| "P" document published prior to the international filing date but later than the priority date claimed | | |

| Date of the actual completion of the international search | Date of mailing of the international search report |
|---|---|
| **06 August 2024** | **22 August 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099303**

| Patent document cited in search report | | | Publication date (day/month/year) | Patent family member(s) | | | Publication date (day/month/year) |
|---|---|---|---|---|---|---|---|
| CN | 111695688 | A | 22 September 2020 | HK | 40028115 | A1 | 01 March 2024 |
| CN | 111488985 | A | 04 August 2020 | None | | | |
| CN | 113361698 | A | 07 September 2021 | HK | 40059840 | A0 | 13 May 2022 |
| CN | 113762495 | A | 07 December 2021 | None | | | |
| CN | 116660982 | A | 29 August 2023 | None | | | |

Form PCT/ISA/210 (patent family annex) (July 2022)

**REFERENCES CITED IN THE DESCRIPTION**

**Patent documents cited in the description**

- RU 2023123996